# EUROPÄISCHE PATENTSCHRIFT

(11) **EP 3 947 075 B1**
(45) Veröffentlichungstag und Bekanntmachung des Hinweises auf die Patenterteilung: **15.03.2023**
(21) Anmeldenummer: 19801225.4
(22) Anmeldetag: 25.10.2019
(51) Int. Cl.: B60W 60/00, B60W 30/095, B60W 30/18, B60W 40/04

(54) **FAHRSYSTEM UND VERFAHREN ZUM AUSWÄHLEN EINER HANDLUNGSOPTION FÜR EIN AUTOMATISIERTES KRAFTFAHRZEUG**
DRIVING SYSTEM AND METHOD FOR SELECTING AN ACTION OPTION FOR AN AUTOMATED MOTOR VEHICLE
SYSTÈME DE CONDUITE ET PROCÉDÉ DE SÉLECTION D'UNE OPTION D'ACTION D'UN VÉHICULE AUTOMOBILE AUTOMATISÉ

(30) Priorität: 29.03.2019 DE 102019108142
(43) Veröffentlichungstag der Anmeldung: 09.02.2022
(73) Patentinhaber: Bayerische Motoren Werke Aktiengesellschaft, 80809 München (DE)
(72) Erfinder: HUBMANN, Constantin, 80469 München (DE); QUETSCHLICH, Nils, 80995 München (DE); SCHULZ, Jens, 80469 München (DE); DR. ALTHOFF, Daniel, 80807 München (DE)
(86) Internationale Anmeldenummer: PCT/EP2019/079165
(87) Internationale Veröffentlichungsnummer: WO 2020/200500

(56) Entgegenhaltungen:
- EP-A1- 3 091 370
- EP-A1- 3 361 466
- DE-A1-102017 206 862

## Beschreibung

Die Erfindung betrifft ein Fahrsystem und ein Verfahren zum automatisierten Fahren für ein Kraftfahrzeug.

Unter dem Begriff "automatisiertes Fahren" kann im Rahmen des Dokuments ein Fahren mit automatisierter Längs- oder Querführung oder ein autonomes Fahren mit automatisierter Längs- und Querführung verstanden werden. Der Begriff "automatisiertes Fahren" umfasst ein automatisiertes Fahren mit einem beliebigen Automatisierungsgrad. Beispielhafte Automatisierungsgrade sind ein assistiertes, teilautomatisiertes, hochautomatisiertes oder vollautomatisiertes Fahren. Diese Automatisierungsgrade wurden von der Bundesanstalt für Straßenwesen (BASt) definiert (siehe BASt-Publikation "Forschung kompakt", Ausgabe 11/2012). Beim assistierten Fahren führt der Fahrer dauerhaft die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich. Die vorstehend genannten vier Automatisierungsgrade gemäß der Definition der BASt entsprechen den SAE-Level 1 bis 4 der Norm SAE J3016 (SAE - Society of Automotive Engineering). Beispielsweise entspricht das hochautomatisierte Fahren (HAF) gemäß der BASt dem Level 3 der Norm SAE J3016. Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich.

Es sind Verfahren zum automatisierten Fahren für Kraftfahrzeuge bekannt. Diese Verfahren basieren darauf, dass das Kraftfahrzeug sein Umfeld mittels Sensoren erfasst und das Fahrzeug in Abhängigkeit von den erfassten Sensordaten gesteuert wird.

Zum weiteren Stand der Technik wird auf die EP 3 361 466 A1 verwiesen.

Allerdings können Bereiche im Umfeld der Kraftfahrzeuge für die Sensoren nicht einsehbar sein, beispielsweise weil diese Bereiche durch Hindernisse verdeckt werden.

Diese verdeckten Bereiche sind ein Problem für die automatisierte Fahrzeugsteuerung, da nicht eindeutig entscheidbar ist, ob sich ein anderer Verkehrsteilnehmer darin befindet, der gegebenenfalls für die Fahrzeugsteuerung relevant ist.

Es ist Aufgabe der Erfindung, einen verbesserten Ansatz zum Auswählen einer Handlungsoption für ein automatisiertes Kraftfahrzeug anzugeben, in dessen Umfeld sich für die Sensoren des Kraftfahrzeugs nicht einsehbare Bereiche befinden.

Die Aufgabe wird durch die Merkmale der unabhängigen Patentansprüche gelöst. Vorteilhafte Ausführungsformen sind in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Ein erster Aspekt der Erfindung betrifft ein Fahrsystem zum automatisierten Fahren für ein Kraftfahrzeug.

Das Fahrsystem ist eingerichtet, eine tatsächliche Verkehrssituation im Umfeld des Kraftfahrzeugs zu erfassen.

Insbesondere umfasst die tatsächliche Verkehrssituation neben dem eigenen Kraftfahrzeug zumindest einen weiteren Verkehrsteilnehmer.

Die tatsächliche Verkehrssituation kann insbesondere eine räumliche Information umfassen, die das eigene Kraftfahrzeugs, den Verkehrsteilnehmer und/oder die Verkehrsinfrastruktur betrifft. Dabei kann es sich beispielsweise um eine Position und/oder um eine Orientierung des eigenen Kraftfahrzeugs oder des Verkehrsteilnehmers handeln.

Alternativ oder zusätzlich kann die tatsächliche Verkehrssituation insbesondere auch eine dynamische Information über den Zustand des Verkehrsteilnehmers oder der Verkehrsinfrastruktur umfassen. Dabei kann es sich beispielsweise um einen Aktivierungszustand eines Fahrtrichtungsanzeigers des Verkehrsteilnehmers oder um den aktuellen Zustand einer Verkehrsampel als Verkehrsinfrastruktur handeln.

Die Erfassung der tatsächlichen Verkehrssituation kann insbesondere mittels Sensoren des Kraftfahrzeugs erfolgen, beispielsweise zumindest mittels einer Kamera, eines Laserscanners und/oder eines Ultraschallsensors.

Bei dem Verkehrsteilnehmer kann es sich insbesondere um ein Kraftfahrzeug, einen Fahrradfahrer, einen Fußgänger oder einen beliebigen anderen Verkehrsteilnehmer handeln.

Das Fahrsystem ist darüber hinaus eingerichtet, ein tatsächliches Sichtfeld zumindest eines Sensors des Kraftfahrzeugs in der tatsächlichen Verkehrssituation zu bestimmen.

Das Sichtfeld des zumindest einen Sensors ergibt sich dabei grundsätzlich aus Bauart des Sensors und wird durch Objekte im Umfeld des Kraftfahrzeugs eingeschränkt. Beispielsweise können statische, beziehungsweise stationäre Objekte im Umfeld des Kraftfahrzeugs, beispielsweise Randbebauung neben der Fahrbahn oder Verkehrsinfrastruktur das Sichtfeld einschränken.

Alternativ oder zusätzlich können dynamische Objekte, beispielsweise andere Verkehrsteilnehmer, das Sichtfeld einschränken.

Das Fahrsystem ist eingerichtet, für zumindest einen Bereich im Umfeld des Kraftfahrzeugs, der nicht im tatsächlichen Sichtfeld des zumindest einen Sensors liegt, beispielsweise weil der Bereich durch ein statisches oder dynamisches Objekt im Umfeld des Kraftfahrzeugs verdeckt wird, einen virtuellen Verkehrsteilnehmer in dem zumindest einen Bereich im Umfeld des Kraftfahrzeugs in Abhängigkeit von einer Auftretenswahrscheinlichkeit für den virtuellen Verkehrsteilnehmer zu simulieren.

Der virtuelle Verkehrsteilnehmer wird also mit einer gewissen Wahrscheinlichkeit in dem zumindest einem Bereich angenommen.

Das Fahrsystem ist darüber hinaus eingerichtet, zumindest zwei alternative Handlungsoptionen betreffend die Längs- und/oder Querführung des eigenen Kraftfahrzeugs ausgehend von der tatsächlichen Verkehrssituation für einen ersten Zeitschritt heranzuziehen.

Bei den Handlungsoptionen kann es sich insbesondere um Handlungsoptionen handeln, die die Geschwindigkeit des Kraftfahrzeugs verändern und beispielsweise die Geschwindigkeit des Kraftfahrzeugs erhöhen oder verringern.

Alternativ oder zusätzlich kann es sich bei den Handlungsoptionen auch um Handlungsoptionen handeln, die die Geschwindigkeit des Kraftfahrzeugs nicht verändern.

Alternativ oder zusätzlich kann es sich bei den Handlungsoptionen um Handlungsoptionen handeln, die die seitliche Ausrichtung des Kraftfahrzeugs in der Fahrspur verändern.

Die Handlungsoptionen beschreiben insbesondere Möglichkeiten zur Beeinflussung der Längsführung des Kraftfahrzeugs, die das Kraftfahrzeug in der tatsächlichen Verkehrssituation ausführen kann. Beispielsweise sind die Handlungsoptionen des Kraftfahrzeugs durch die Antriebsleistung des Kraftfahrzeugs und durch die Regeln der Physik begrenzt.

Die Handlungsoptionen können dabei insbesondere aus einer Menge an vordefinierten Handlungsoptionen ausgewählt und beispielsweise parametriert werden. Alternativ oder zusätzlichen können die Handlungsoptionen auch frei ermittelt werden, ohne vorab festgelegt worden zu sein.

Insbesondere ist die Anzahl der Handlungsoptionen abzählbar begrenzt. Beispielsweise ist das Fahrsystem eingerichtet, weniger als 10, weniger als 25 oder weniger als 50 Handlungsoptionen heranzuziehen.

Für jede dieser Handlungsoptionen wird zumindest eine mögliche zukünftige Verkehrssituation für den ersten Zeitschritt als Folge der jeweiligen Handlungsoption bestimmt.

Eine mögliche zukünftige Verkehrssituation kann insbesondere eine zum aktuellen Zeitpunkt noch nicht tatsächlich vorliegende, hypothetische Verkehrssituation sein. Diese kann insbesondere, vergleichbar zur tatsächlichen Verkehrssituation, eine räumliche Information über das eigene Kraftfahrzeug, den Verkehrsteilnehmer und/oder die Verkehrsinfrastruktur umfassen.

Alternativ oder zusätzlich kann die mögliche zukünftige Verkehrssituation auch eine dynamische Information über den Zustand des Verkehrsteilnehmers oder der Verkehrsinfrastruktur umfassen.

Eine mögliche zukünftige Verkehrssituation für den ersten Zeitschritt kann insbesondere durch Anwendung eines stochastischen Verfahrens aus der tatsächlichen Verkehrssituation abgeleitet werden. Hierfür kann beispielsweise die räumliche Position eines ausgewählten Verkehrsteilnehmers in einer möglichen zukünftigen Verkehrssituation für den ersten Zeitschritt mittels eines Zufallsvektors ausgehend von der räumlichen Position des ausgewählten Verkehrsteilnehmers in der tatsächlichen Verkehrssituation ermittelt werden.

In einer möglichen zukünftigen Verkehrssituation für den ersten Zeitschritt kann insbesondere die räumliche Position des eigenen Kraftfahrzeugs derart bestimmt werden, dass ausgehend von der räumlichen Position des eigenen Kraftfahrzeugs in der tatsächlichen Verkehrssituation eine Ausführung einer Handlungsoption betreffend die Längsführung des eigenen Kraftfahrzeugs angenommen wird.

Das Fahrsystem ist außerdem eingerichtet, die räumliche Position des zumindest einen virtuellen Verkehrsteilnehmers in jeder möglichen zukünftigen Verkehrssituation derart zu bestimmen, dass sich der zumindest eine virtuelle Verkehrsteilnehmer ausgehend von der räumlichen Position des zumindest einen virtuellen Verkehrsteilnehmers in der tatsächlichen Verkehrssituation bewegt.

Für jede dieser möglichen zukünftigen Verkehrssituationen wird eine Bewertung in Abhängigkeit von einer möglichen virtuellen Kollision des eigenen Kraftfahrzeugs mit dem zumindest einen virtuellen Verkehrsteilnehmer vorgenommen, wobei die Bewertung insbesondere eine Bewertung des Gefährdungspotentials und/oder eine Bewertung des Fahrkomforts des eigenen Kraftfahrzeugs umfasst.

Eine der Handlungsoptionen betreffend die Längsführung des eigenen Kraftfahrzeugs wird in Abhängigkeit hiervon für den ersten Zeitschritt ausgewählt. Dabei kann insbesondere diejenige Handlungsoption ausgewählt werden, deren zugeordnete Verkehrssituationen ein möglichst geringes Gefährdungspotential und/oder einen möglichst hohen Fahrkomfort des eigenen Kraftfahrzeugs zeigen.

Die ausgewählte Handlungsoption betreffend die Längsführung des eigenen Kraftfahrzeugs wird daraufhin ausgeführt.

Das Fahrsystem ist insbesondere eingerichtet, für jede dieser möglichen zukünftigen Verkehrssituationen eine Bewertung durch Bestimmung von zumindest einem mit der jeweiligen möglichen zukünftigen Verkehrssituation zusammenhängenden Kostenwert vorzunehmen.

Der Kostenwert kann dabei insbesondere in Abhängigkeit von der räumlichen Position oder Orientierung des eigenen Kraftfahrzeugs und/oder eines weiteren Verkehrsteilnehmers ermittelt werden.

Alternativ oder zusätzlich kann der Kostenwert insbesondere auch in Abhängigkeit von dem räumlichen Verhältnis des eigenen Kraftfahrzeugs, zumindest eines Verkehrsteilnehmers und/oder zumindest eines Objekts der Verkehrsinfrastruktur zueinander ermittelt werden. Beispielsweise kann der Kostenwert die räumliche Distanz zwischen dem eigenen Kraftfahrzeug und einem Verkehrsteilnehmer angeben. Dabei kann ein hoher Kostenwert für eine geringe räumliche Distanz charakteristisch sein und ein geringer Kostenwert kann für eine hohe räumliche Distanz charakteristisch sein bei sonst gleichen anderen Einflussgrößen. Der Kostenwert kann somit beispielsweise das Gefährdungspotential für das eigene Kraftfahrzeug repräsentieren.

Insbesondere ist das Fahrsystem eingerichtet, den Kostenwert in Abhängigkeit von zumindest einer, zu der jeweiligen möglichen zukünftigen Verkehrssituation führenden Handlungsoption zu ermitteln, insbesondere in Abhängigkeit von einem Bremsvorgang und/oder einem Beschleunigungsvorgang des eigenen Kraftfahrzeugs. Beispielsweise kann ein hoher Kostenwert charakteristisch sein für eine betragsmäßig große Änderung der Geschwindigkeit des Kraftfahrzeugs. Alternativ dazu kann ein geringer Kostenwert charakteristisch sein für eine betragsmäßig geringe Änderung der Geschwindigkeit des Kraftfahrzeugs.

Alternativ oder zusätzlich kann der Kostenwert beispielsweise auch charakteristisch sein für eine Änderung der Beschleunigung des Kraftfahrzeugs, wobei sowohl eine Änderung des Vorzeichens der auf das eigene Kraftfahrzeug wirkenden Beschleunigung als auch der Betrag der Änderung der Beschleunigung berücksichtigt werden können. Der Kostenwert kann somit beispielsweise den Fahrkomfort des eigenen Kraftfahrzeugs repräsentieren oder hiervon abhängen.

Insbesondere ist das Fahrsystem eingerichtet, den Kostenwert in Abhängigkeit von der jeweiligen möglichen zukünftigen Verkehrssituation selbst zu ermitteln, insbesondere in Abhängigkeit von einer Kollision des eigenen Fahrzeugs mit dem Verkehrsteilnehmer in der jeweiligen möglichen zukünftigen Verkehrssituation. Beispielsweise kann ein hoher Kostenwert charakteristisch sein für eine Kollision des eigenen Kraftfahrzeugs mit einem Verkehrsteilnehmer. Dieser hohe, für eine Kollision charakteristische Kostenwert, kann beispielsweise um zumindest eine Größenordnung größer sein als alle anderen Kostenwerte ohne Kollision.

Alternativ oder zusätzlich kann insbesondere auch eine Kollisionsgefahr zwischen dem eigenen Kraftfahrzeug und einem Verkehrsteilnehmer in den Kostenwert einfließen. Beispielsweise kann ein hoher Kostenwert für eine Kollisionsgefahr charakteristisch sein, wobei der Kostenwert für eine Kollisionsgefahr niedriger sein kann als der Kostenwert für eine tatsächliche Kollision.

Insbesondere ist das Fahrsystem eingerichtet, jede dieser möglichen zukünftigen Verkehrssituationen in Abhängigkeit von zumindest einer möglichen Bewegung des Verkehrsteilnehmers zu bestimmen.

Eine mögliche Bewegung des Verkehrsteilnehmers kann insbesondere in Abhängigkeit der Freiheitsgrade des Verkehrsteilnehmers ermittelt werden. Wenn es sich bei dem Verkehrsteilnehmer beispielsweise um ein Kraftfahrzeug handelt, so sind dessen Bewegungsmöglichkeiten unter anderem durch dessen maximalen Lenkwinkel und dessen Antriebsleistung begrenzt. Wenn es sich alternativ dazu bei dem Verkehrsteilnehmer um einen Fußgänger handelt, so sind dessen Bewegungsmöglichkeiten durch seine in Vergleich zu motorisierten Verkehrsteilnehmern geringe Bewegungsgeschwindigkeit begrenzt.

Durch die Bestimmung möglicher zukünftiger Verkehrssituationen in Abhängigkeit von zumindest einer möglichen Bewegung des Verkehrsteilnehmers werden insbesondere nur tatsächlich mögliche zukünftige Verkehrssituationen betrachtet, die innerhalb der Grenzen der Physik real eintreten können.

Alternativ oder zusätzlich kann eine mögliche Bewegung des Verkehrsteilnehmers insbesondere in Abhängigkeit des Zustands des Verkehrsteilnehmers selbst ermittelt werden. Wenn es sich bei dem Verkehrsteilnehmer beispielsweise um ein Kraftfahrzeug handelt, so kann aus einem aktivierten Fahrtrichtungsanzeiger des Verkehrsteilnehmers darauf geschlossen werden, dass und in welche Richtung der Verkehrsteilnehmer abbiegen wird.

Der Bestimmung jeder dieser möglichen zukünftigen Verkehrssituationen in Abhängigkeit von zumindest einer möglichen Bewegung des Verkehrsteilnehmers liegt insbesondere der Gedanke zugrunde, dass dadurch die Anzahl der möglichen zukünftigen Verkehrssituationen im Vergleich zur Anzahl aller theoretisch möglichen zukünftigen Verkehrssituationen verringert werden kann. Dadurch kann die erfindungsgemäße Auswahl einer Handlungsoption betreffend die Längsführung des eigenen Kraftfahrzeugs effizienter erfolgen.

Insbesondere ist das Fahrsystem eingerichtet, für jede dieser möglichen zukünftigen Verkehrssituationen eine für die Eintrittswahrscheinlichkeit der jeweiligen möglichen zukünftigen Verkehrssituation charakteristische Größe zu ermitteln, und die Handlungsoption in Abhängigkeit hiervon auszuwählen.

Die Eintrittswahrscheinlichkeit der jeweiligen möglichen zukünftigen Verkehrssituation kann insbesondere in Abhängigkeit von den Wahrscheinlichkeiten ermittelt werden, mit denen die Verkehrsteilnehmer ihre räumliche Position und/oder ihren Zustand verändern.

Beispielsweise kann in einer Verkehrssituation an einem Kreisverkehr die Wahrscheinlichkeit berücksichtigt werden, mit der ein Kraftfahrzeug als Verkehrsteilnehmer den Kreisverkehr an der nächstmöglichen Ausfahrt verlässt.

Zur Bestimmung dieser Wahrscheinlichkeit kann beispielsweise die räumliche Ausrichtung des Kraftfahrzeugs ausgewertet werden. Wenn die Front des Kraftfahrzeugs in Richtung der nächstmöglichen Ausfahrt des Kreisverkehrs ausgerichtet ist, so ist beispielsweise die Wahrscheinlichkeit, dass das Kraftfahrzeug den Kreisverkehr verlässt, höher als die Wahrscheinlichkeit, dass das Kraftfahrzeug den Kreisverkehr nicht verlässt.

Alternativ oder zusätzlich kann die Eintrittswahrscheinlich der jeweiligen möglichen zukünftigen Verkehrssituation insbesondere in Abhängigkeit von den Wahrscheinlichkeiten ermittelt werden, mit denen Objekte der Verkehrsinfrastruktur ihren Zustand verändern.

Beispielsweise kann bei einer Verkehrsampel angenommen werden, dass die Wahrscheinlich für einen Zustandswechsel im Laufe der Zeit ansteigt, je länger der aktuelle Zustand der Verkehrsampel bereits vorliegt.

Die Eintrittswahrscheinlichkeit einer Verkehrssituation kann insbesondere auch zeitabhängig sein. So kann eine mögliche zukünftige Verkehrssituation im Laufe der Zeit wahrscheinlicher oder unwahrscheinlicher werden. Beispielsweise kann sich ein Fahrzeug auf eine Kreuzung zubewegen, in der das Fahrzeug mehrere Abbiegemöglichkeiten hat. Wenn das Fahrzeug noch weit von der Kreuzung entfernt ist, so kann jede Abbiegemöglichkeit im Wesentlichen gleich wahrscheinlich sein. Sobald das Fahrzeug aber in die Kreuzung einfährt und sich in Richtung einer Ausfahrt der Kreuzung ausrichtet, so kann diese eine Abbiegemöglichkeit als wahrscheinlicher angenommen werden, als die anderen verbleibenden Abbiegemöglichkeiten.

Insbesondere ist das Fahrsystem eingerichtet, die für die Eintrittswahrscheinlichkeit der möglichen zukünftigen Verkehrssituation charakteristische Größe als Gewichtungsfaktor für die Bewertung der jeweiligen möglichen zukünftigen Verkehrssituation zu nutzen.

Somit kann insbesondere eine erste mögliche zukünftige Verkehrssituation mit im Vergleich zu einer zweiten möglichen zukünftigen Verkehrssituation höheren Eintrittswahrscheinlichkeit höher bewertet werden als die zweite mögliche zukünftige Verkehrssituation, sofern die Verkehrssituationen sonst die gleiche Bewertung haben.

In einer vorteilhaften Ausführungsform ist die Auftretenswahrscheinlichkeit für den virtuellen Verkehrsteilnehmer von der räumlichen Größe des Bereichs im Umfeld des Kraftfahrzeugs, der nicht im tatsächlichen Sichtfeld des zumindest einen Sensors liegt, abhängig.

Beispielsweise kann die Auftretenswahrscheinlichkeit in Abhängigkeit von einer angenommenen Verkehrsdichte bestimmt werden, so dass sich die Auftretenswahrscheinlichkeit als Produkt der räumlichen Ausdehnung des Bereichs im Umfeld des Kraftfahrzeugs, der nicht im tatsächlichen Sichtfeld des zumindest einen Sensors liegt, und der angenommenen Verkehrsdichte ergibt.

In einer weiteren vorteilhaften Ausführungsform ist das Fahrsystem eingerichtet, für zumindest eine mögliche zukünftige Verkehrssituation ein virtuelles Sichtfeld des zumindest einen Sensors des Kraftfahrzeugs in der möglichen zukünftigen Verkehrssituation zu bestimmen, und für zumindest einen Bereich im Umfeld des Kraftfahrzeugs, der nicht im virtuellen Sichtfeld des zumindest einen Sensors liegt, einen virtuellen Verkehrsteilnehmer in dem zumindest einen Bereich im Umfeld des Kraftfahrzeugs in Abhängigkeit von einer Auftretenswahrscheinlichkeit für den virtuellen Verkehrsteilnehmer zu simulieren.

Insbesondere ist das Fahrsystem eingerichtet, den zumindest einen Bereich im Umfeld des Kraftfahrzeugs, der nicht im virtuellen Sichtfeld des zumindest einen Sensors liegt, mit einem Bereich im Umfeld des Kraftfahrzeugs, der nicht im virtuellen Sichtfeld des zumindest einen Sensors für einen anderen Zeitschritt liegt, oder einem Bereich im Umfeld des Kraftfahrzeugs, der nicht im tatsächlichen Sichtfeld des zumindest einen Sensors liegt, zu korrelieren.

Insbesondere kann der virtuelle Verkehrsteilnehmer dann in dem zumindest einen Bereich im Umfeld des Kraftfahrzeugs in Abhängigkeit von einer Auftretenswahrscheinlichkeit für den virtuellen Verkehrsteilnehmer simuliert werden, wenn in den entsprechenden Bereichen anderer Zeitschritte kein virtueller Verkehrsteilnehmer simuliert wurde.

In einer vorteilhaften Ausführungsform ist das Fahrsystem eingerichtet, den virtuellen Verkehrsteilnehmer derart zu simulieren, dass die Vorderkante des virtuellen Verkehrsteilnehmers in Fahrtrichtung des virtuellen Verkehrsteilnehmers direkt an einem Rand des Bereichs im Umfeld des Kraftfahrzeugs befindet, der nicht im tatsächlichen Sichtfeld des zumindest einen Sensors liegt.

In einer vorteilhaften Ausführungsform ist das Fahrsystem eingerichtet, den virtuellen Verkehrsteilnehmer derart zu simulieren, dass die Länge des virtuellen Verkehrsteilnehmers entlang der Längsachse in Fahrtrichtung als unendlich angenommen wird.

Diese Annahme kann beispielsweise umgesetzt werden, indem die Länge des virtuellen Verkehrsteilnehmers entlang der Längsachse in Fahrtrichtung sehr groß gewählt wird, insbesondere deutlich größer als bei einem realen Verkehrsteilnehmer. So kann die Länge des virtuellen Verkehrsteilnehmers entlang der Längsachse in Fahrtrichtung beispielweise mehr als 10m, 25m oder 100m betragen.

In einer weiteren vorteilhaften Ausführungsform ist das Fahrsystem eingerichtet, die räumliche Position des zumindest einen virtuellen Verkehrsteilnehmers in einer möglichen zukünftigen Verkehrssituation in Abhängigkeit von einer konstanten Geschwindigkeit des virtuellen Verkehrsteilnehmers zu bestimmen.

Insbesondere ist die konstante Geschwindigkeit des virtuellen Verkehrsteilnehmers höher als die in der jeweiligen möglichen zukünftigen Verkehrssituation tatsächlich erlaubte Höchstgeschwindigkeit. Beispielsweise kann die konstante Geschwindigkeit des virtuellen Verkehrsteilnehmers zumindest 120% oder zumindest 130% der tatsächlich erlaubten Höchstgeschwindigkeit betragen.

Insbesondere durch Kombination der vorteilhaften Ausführungsformen, dass das Fahrsystem eingerichtet ist, den virtuellen Verkehrsteilnehmer derart zu simulieren, dass die Länge des virtuellen Verkehrsteilnehmers entlang der Längsachse in Fahrtrichtung als unendlich angenommen wird, und dass die konstante Geschwindigkeit des virtuellen Verkehrsteilnehmers höher als die in der jeweiligen möglichen zukünftigen Verkehrssituation tatsächlich erlaubte Höchstgeschwindigkeit, ergibt sich der synergetische Effekt, dass eine valide "worst case"-Betrachtung durchgeführt werden kann.

Der Vorteil dieser "worst case"-Betrachtung besteht darin, dass somit alle möglichen Zustände, bezogen auf Position und Geschwindigkeit des virtuellen Verkehrsteilnehmers, abgedeckt werden können, hinsichtlich der Position und Geschwindigkeit des virtuellen Verkehrsteilnehmers relativ zu dem Bereich im Umfeld des Kraftfahrzeugs, der nicht im Sichtfeld des zumindest einen Sensors liegt.

In einer weiteren vorteilhaften Ausführungsform ist das Fahrsystem eingerichtet, für zumindest eine dieser möglichen zukünftigen Verkehrssituationen zumindest eine Handlungsoptionen betreffend die Längs- und/oder Querführung des eigenen Kraftfahrzeugs ausgehend von der jeweiligen möglichen zukünftigen Verkehrssituation für zumindest einen zweiten Zeitschritt zu bestimmen.

Der zumindest eine zweite Zeitschritt folgt dabei auf den ersten Zeitschritt. Insbesondere kann es sich auch um mehr als nur einen zweiten Zeitschritt handeln, wobei diese weiteren, folgenden Zeitschritte äquivalent zum zweiten Zeitschritt sind. Deshalb wird in diesem Dokument nur der zweite Zeitschritt explizit erwähnt.

Die zumindest eine Handlungsoption betreffend die Längsführung des eigenen Kraftfahrzeugs für den zweiten Zeitschritt kann insbesondere analog zu den Handlungsoptionen für den ersten Zeitschritt bestimmt werden. Die Bestimmung der Handlungsoption für den zweiten Zeitschritt kann sich dabei beispielsweise von der Bestimmung der Handlungsoption für den ersten Zeitschritt darin unterscheiden, dass statt der tatsächlichen Verkehrssituation eine mögliche zukünftige Verkehrssituation die Ausgangssituation für die Bestimmung darstellt.

Für jede dieser Handlungsoptionen für den zweiten Zeitschritt wird zumindest eine mögliche zukünftige Verkehrssituation für den zweiten Zeitschritt als Folge der jeweiligen Handlungsoption für den zweiten Zeitschritt bestimmt.

Die möglichen zukünftigen Verkehrssituationen für den zumindest einen zweiten Zeitschritt können insbesondere analog zu den möglichen zukünftigen Verkehrssituationen für den ersten Zeitschritt bestimmt werden.

Dadurch, dass somit eine mögliche zukünftige Verkehrssituation für den zweiten Zeitschritt aus einer möglichen zukünftigen Verkehrssituation für den ersten Zeitschritt abgeleitet werden kann, kann insbesondere eine Kette und/oder ein Baum von aufeinander folgenden möglichen zukünftigen Verkehrssituationen erzeugt werden.

Die räumliche Position des zumindest einen virtuellen Verkehrsteilnehmers wird in jeder möglichen zukünftigen Verkehrssituation für den zweiten Zeitschritt derart bestimmt, dass sich der zumindest eine virtuelle Verkehrsteilnehmer ausgehend von der räumlichen Position des zumindest einen virtuellen Verkehrsteilnehmers in jeweiligen möglichen zukünftigen Verkehrssituation für den ersten Zeitschritt bewegt, analog zu einer Bewegung des virtuellen Verkehrsteilnehmers zwischen der tatsächlichen Verkehrssituation und der möglichen zukünftigen Verkehrssituation für den ersten Zeitschritt.

Für jede dieser möglichen zukünftigen Verkehrssituationen für den zweiten Zeitschritt wird eine Bewertung in Abhängigkeit von einer möglichen virtuellen Kollision des eigenen Kraftfahrzeugs mit dem zumindest einen virtuellen Verkehrsteilnehmer vorgenommen, insbesondere analog zur Vornahme einer Bewertung der möglichen zukünftigen Verkehrssituationen für den ersten Zeitschritt.

Eine Handlungsoption für den ersten Zeitschritt wird beispielsweise in Abhängigkeit von den Bewertungen der möglichen zukünftigen Verkehrssituationen für den ersten Zeitschritt und in Abhängigkeit von den Bewertungen der möglichen zukünftigen Verkehrssituationen für den zumindest einen zweiten Zeitschritt ausgewählt.

Dabei können insbesondere die Bewertungen der möglichen zukünftigen Verkehrssituationen für den ersten Zeitschritt und die Bewertungen der möglichen zukünftigen Verkehrssituationen für den zweiten Zeitschritt in Abhängigkeit von der Baumstruktur ausgewertet werden, in der alle möglichen zukünftigen Verkehrssituationen miteinander mittels Handlungsoptionen verknüpft sind.

Beispielsweise kann für jede Handlungsoption für den ersten Zeitschritt die Summe der Werte der Bewertungen aller möglichen zukünftigen Verkehrssituationen bestimmt werden, die direkt und/oder indirekt aus der Handlungsoption hervorgehen können. Daraus resultierend kann die für einen gewissen zeitlichen Horizont bestbewertete Handlungsoption ausgewählt werden.

Alternativ kann beispielsweise für den ersten Zeitschritt auch die Handlungsoption betreffend die Längsführung des eigenen Kraftfahrzeugs ausgewählt werden, von der aus der bestbewertete Pfad in der Baumstruktur der möglichen zukünftigen Verkehrssituationen beginnt.

In einer weiteren vorteilhaften Ausführungsform ist das Fahrsystem eingerichtet, für zumindest eine mögliche zukünftige Verkehrssituation für den zweiten Zeitschritt ein virtuelles Sichtfeld des zumindest einen Sensors des Kraftfahrzeugs in der möglichen zukünftigen Verkehrssituation zu bestimmen, und für zumindest einen Bereich im Umfeld des Kraftfahrzeugs, der nicht im virtuellen Sichtfeld des zumindest einen Sensors liegt, einen virtuellen Verkehrsteilnehmer in dem zumindest einen Bereich im Umfeld des Kraftfahrzeugs in Abhängigkeit von einer Auftretenswahrscheinlichkeit zu simulieren.

In einer weiteren vorteilhaften Ausführungsform ist eine Handlungsoption betreffend die Längsführung des eigenen Kraftfahrzeugs eine Verringerung der Geschwindigkeit des eigenen Kraftfahrzeugs. Eine Verringerung der Geschwindigkeit des Kraftfahrzeugs kann insbesondere zu einer Verringerung des Gefährdungspotentials und beispielsweise einer Verringerung des Kollisionsrisikos mit anderen Verkehrsteilnehmern führen.

Ein zweiter Aspekt der Erfindung betrifft ein Verfahren zum automatisierten Fahren für ein Kraftfahrzeug.

Ein Schritt des Verfahrens ist das Erfassen einer tatsächlichen Verkehrssituation im Umfeld des Kraftfahrzeugs.

Ein weiterer Schritt des Verfahrens ist das Bestimmen eines tatsächlichen Sichtfelds zumindest eines Sensors des Kraftfahrzeugs in der tatsächlichen Verkehrssituation.

Ein weiterer Schritt des Verfahrens ist das Simulieren eines virtuellen Verkehrsteilnehmers in dem zumindest einen Bereich im Umfeld des Kraftfahrzeugs in Abhängigkeit von einer Auftretenswahrscheinlichkeit für den virtuellen Verkehrsteilnehmer, für zumindest einen Bereich im Umfeld des Kraftfahrzeugs, der nicht im tatsächlichen Sichtfeld des zumindest einen Sensors liegt.

Ein weiterer Schritt des Verfahrens ist das Heranziehen von zumindest zwei alternative Handlungsoptionen betreffend die Längs- und/oder Querführung des eigenen Kraftfahrzeugs ausgehend von der tatsächlichen Verkehrssituation für einen ersten Zeitschritt.

Ein weiterer Schritt des Verfahrens ist das Bestimmen von jeweils zumindest einer möglichen zukünftigen Verkehrssituation für den ersten Zeitschritt als Folge der jeweiligen Handlungsoption für diese Handlungsoptionen.

Ein weiterer Schritt des Verfahrens ist das Bestimmen der räumlichen Position des zumindest einen virtuellen Verkehrsteilnehmers in jeder möglichen zukünftigen Verkehrssituation derart, dass sich der zumindest eine virtuelle Verkehrsteilnehmer ausgehend von der räumlichen Position des zumindest einen virtuellen Verkehrsteilnehmers in der tatsächlichen Verkehrssituation bewegt.

Ein weiterer Schritt des Verfahrens ist das Vornehmen einer Bewertung für jeweils diese möglichen zukünftigen Verkehrssituationen in Abhängigkeit von einer möglichen virtuellen Kollision des eigenen Kraftfahrzeugs mit dem zumindest einen virtuellen Verkehrsteilnehmer.

Ein weiterer Schritt des Verfahrens ist das Auswählen von einer dieser Handlungsoptionen in Abhängigkeit hiervon für den ersten Zeitschritt.

Ein weiterer Schritt des Verfahrens ist das Ausführen der ausgewählten Handlungsoption.

Die vorstehenden Ausführungen zum erfindungsgemäßen Fahrsystem nach dem ersten Aspekt der Erfindung gelten in entsprechender Weise auch für das erfindungsgemäße Verfahren nach dem zweiten Aspekt der Erfindung. An dieser Stelle und in den Patentansprüchen nicht explizit beschriebene vorteilhafte Ausführungsbeispiele des erfindungsgemäßen Verfahrens nach dem zweiten Aspekt der Erfindung entsprechen den vorstehend beschriebenen oder in den Patentansprüchen beschriebenen vorteilhaften Ausführungsbeispielen des erfindungsgemäßen Fahrsystems nach dem ersten Aspekt der Erfindung.

Die Erfindung wird nachfolgend anhand eines Ausführungsbeispiels unter Zuhilfenahme der beigefügten Zeichnungen beschrieben. In diesen zeigen:
- Fig. 1: einen beispielhafte Baumstruktur aus Verkehrssituationen und Handlungsoptionen,
- Fig. 2: ein beispielhaftes Ablaufdiagramm für die Funktionsweise des erfindungsgemäßen Fahrsystems,
- Fig. 3a: eine beispielhafte Verkehrssituation mit einem weiteren Verkehrsteilnehmer,
- Fig. 3b: beispielhafte Verläufe von Wahrscheinlichkeiten, und
- Fig. 4: eine beispielhafte Verkehrssituation mit einem virtuellen Verkehrsteilnehmer.

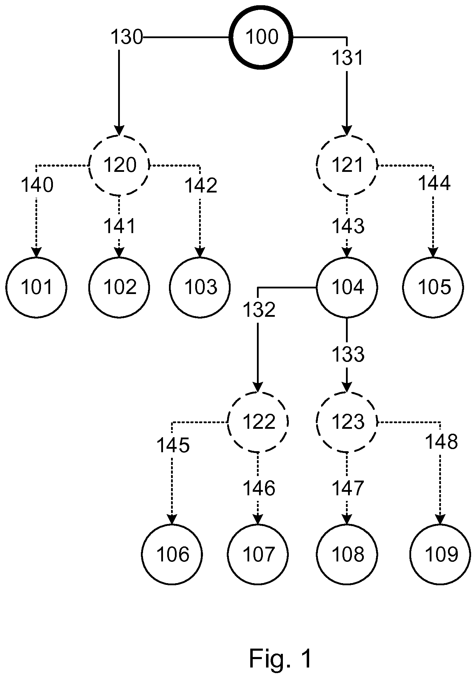

Fig. 1 zeigt eine beispielhafte Baumstruktur aus Verkehrssituationen 100 - 109 und Handlungsoptionen 130 - 133.

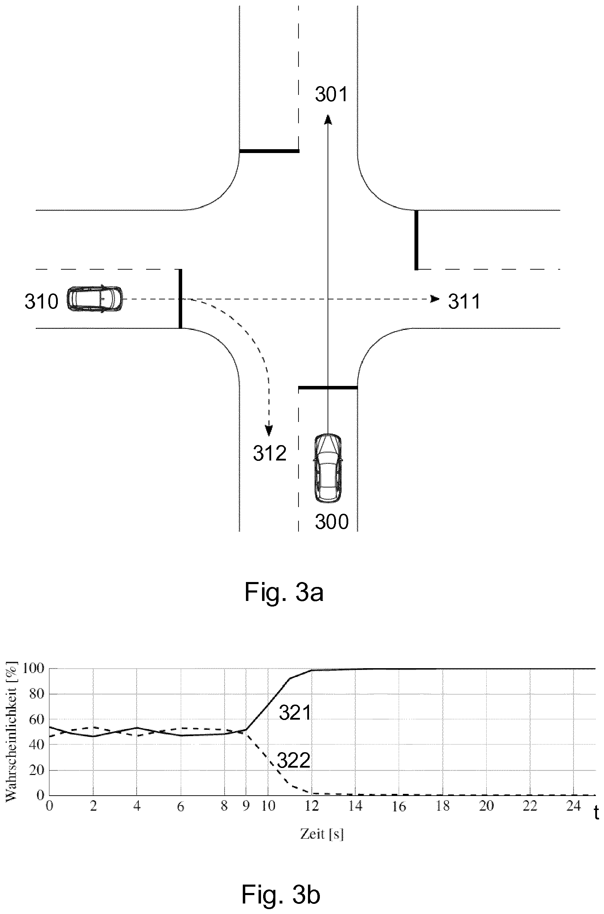

Die tatsächliche Verkehrssituation 100 stellt den Wurzelknoten der Baumstruktur dar. Die tatsächliche Verkehrssituation 100 beschreibt beispielsweise die räumliche Position eines eigenen Fahrzeugs 300 und mehrerer zusätzlicher Verkehrsteilnehmer 310 wie beispielsweise anderer Kraftfahrzeuge oder Fußgänger (vgl. Fig. 3a für die Positionen).

Ausgehend von der tatsächlichen Verkehrssituation 100 stehen dem eigenen Kraftfahrzeug 300 für einen ersten Zeitschritt zwei verschiedene Handlungsoptionen 130, 131 betreffend die Längsführung des eigenen Kraftfahrzeugs 300 zur Verfügung. Diese Handlungsoptionen können beispielsweise eine Veränderung der Geschwindigkeit des Kraftfahrzeugs 300 bewirken, wie beispielsweise ein Beschleunigungsmanöver oder ein Bremsvorgang.

Würde das eigene Kraftfahrzeug 300 die Handlungsoption 130 ausführen, so würde sich alleine daraus noch keine Verkehrssituation ergeben, da alleine aus der Handlungsoption 130 noch nicht auf eine Veränderung der räumlichen Position der zusätzlichen Verkehrsteilnehmer 310 für den ersten Zeitschritt geschlossen werden kann. Aus diesem Grund umfasst die beispielhafte Baumstruktur Hilfsknoten 120 - 123.

Ausgehend von dem Hilfsknoten 120 können verschiedenen Annahmen 140 - 142 für eine Veränderung der räumlichen Position der zusätzlichen Verkehrsteilnehmer 310 für den ersten Zeitschritt getroffen werden, beispielsweise mittels eines stochastischen Prozesses oder durch Auswertung der Bewegungsfreiheitsgrade der zusätzlichen Verkehrsteilnehmer 310. Diese Annahmen können beispielsweise als angenommene, nicht tatsächliche Sensorwerte interpretiert werden.

Basierend auf den Annahmen 140 - 142 für eine Veränderung der räumlichen Position der zusätzlichen Verkehrsteilnehmer 310 und der Handlungsoption 130 des eigenen Kraftfahrzeugs 300 ergeben sich verschiedene mögliche zukünftige Verkehrssituationen 101 - 103 für den ersten Zeitschritt.

Würde das eigenen Kraftfahrzeug 300 die Handlungsoption 131 ausführen, können für eine Veränderung der räumlichen Position der zusätzlichen Verkehrsteilnehmer 310 ebenfalls Annahmen 143, 144 getroffen werden. Diese Annahmen 143, 144 können sich von den Annahmen 140 - 142 beispielsweise unterscheiden, es kann sich allerdings auch zumindest teilweise um gleiche Annahmen handeln.

Basierend auf den Annahmen 143, 144 für eine Veränderung der räumlichen Position der zusätzlichen Verkehrsteilnehmer 310 und der Handlungsoption 131 des eigenen Kraftfahrzeugs 300 ergeben sich verschiedene mögliche zukünftige Verkehrssituationen 104, 105 für den ersten Zeitschritt.

Für einen zweiten, auf den ersten Zeitschritt folgenden Zeitschritt stehen dem eigenen Kraftfahrzeug 300 beispielsweise ausgehend von der möglichen zukünftigen Verkehrssituation 104 erneut zwei Handlungsoptionen 132, 133 zur Verfügung.

Würde das eigene Kraftfahrzeug 300 in dem zweiten Zeitschritt die Handlungsoption 132 ausführen, können für eine Veränderung der räumlichen Position der zusätzlichen Verkehrsteilnehmer 310 für den zweiten Zeitschritt erneut Annahmen 145, 146 auf Grundlage der möglichen zukünftigen Verkehrssituation 104 für den ersten Zeitschritt getroffen werden.

Basierend auf den Annahmen 145, 146 für eine Veränderung der räumlichen Position der zusätzlichen Verkehrsteilnehmer 310 und der Handlungsoption 132 des eigenen Kraftfahrzeugs 300 ergeben sich verschiedene mögliche zukünftige Verkehrssituationen 106, 107 für den zweiten Zeitschritt.

Würde das eigene Kraftfahrzeug 300 in dem zweiten Zeitschritt die Handlungsoption 133 ausführen, können für eine Veränderung der räumlichen Position der zusätzlichen Verkehrsteilnehmer 310 für den zweiten Zeitschritt ebenfalls Annahmen 147, 148 auf Grundlage der möglichen zukünftigen Verkehrssituation 104 für den ersten Zeitschritt getroffen werden.

Basierend auf den Annahmen 147, 148 für eine Veränderung der räumlichen Position der zusätzlichen Verkehrsteilnehmer 310 und der Handlungsoption 133 des eigenen Kraftfahrzeugs 300 ergeben sich verschiedene mögliche zukünftige Verkehrssituationen 108, 109 für den zweiten Zeitschritt.

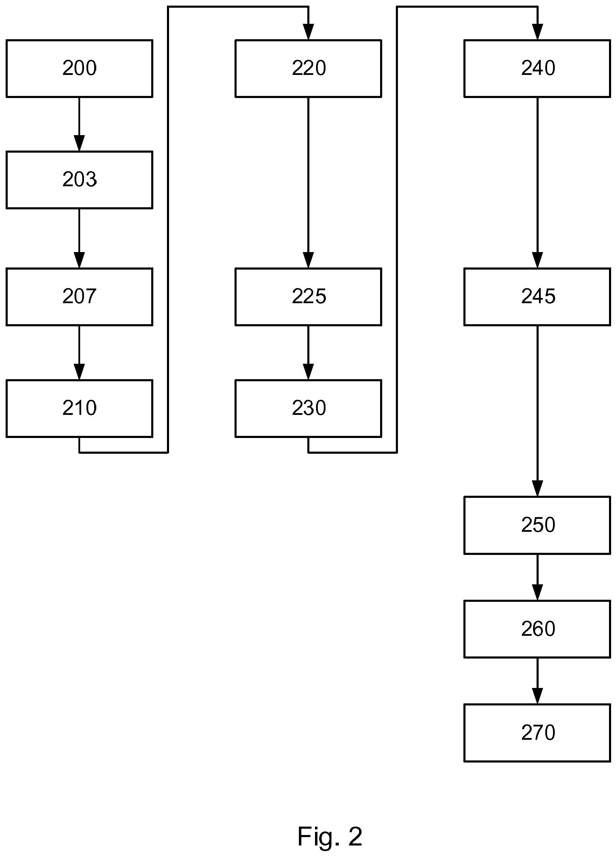

Fig. 2 zeigt ein beispielhaftes Ablaufdiagramm für die Funktionsweise des erfindungsgemäßen Fahrsystems.

In Schritt 200 wird dabei eine tatsächliche Verkehrssituation 100 im Umfeld des eigenen Kraftfahrzeugs 300 beispielsweise mittels der Sensorik des eigenen Kraftfahrzeugs 300 erfasst.

In Schritt 203 wird ein tatsächliches Sichtfelds FOV zumindest eines Sensors des Kraftfahrzeugs 300 in der tatsächlichen Verkehrssituation 100 bestimmt.

Das Sichtfeld des zumindest einen Sensors ergibt sich dabei grundsätzlich aus Bauart des Sensors und wird durch Objekte 400 im Umfeld des Kraftfahrzeugs eingeschränkt, beispielsweise durch statische oder dynamische Objekte 400 im Umfeld des Kraftfahrzeugs.

Anschließend wird in Schritt 207ein virtueller Verkehrsteilnehmers 401 in dem zumindest einen Bereich OC1-OC2 im Umfeld des Kraftfahrzeugs 300 in Abhängigkeit von einer Auftretenswahrscheinlichkeit für den virtuellen Verkehrsteilnehmer 300, für zumindest einen Bereich OC1-OC2 im Umfeld des Kraftfahrzeugs 300, der nicht im tatsächlichen Sichtfeld FOV des zumindest einen Sensors liegt, simuliert.

Auf Basis der tatsächlichen Verkehrssituation 100 werden in Schritt 210 zumindest zwei alternative Handlungsoptionen 130, 131 betreffend die Längsführung des eigenen Kraftfahrzeugs 300 für einen ersten Zeitschritt herangezogen. Diese können beispielsweise aus einer vorbestimmten Menge von möglichen Handlungsoptionen ausgewählt werden.

Bei diesen Handlungsoptionen kann es sich beispielsweise um eine Erhöhung 130 der Geschwindigkeit des eigenen Kraftfahrzeugs 300 und um eine Verringerung 131 der Geschwindigkeit des eigenen Kraftfahrzeugs 300 handeln.

Für jede dieser Handlungsoptionen werden in Schritt 220 mögliche zukünftige Verkehrssituationen 101 - 105 für den ersten Zeitschritt bestimmt. Die möglichen zukünftigen Verkehrssituationen 101- 105, die einer Handlungsoption 130, 131 zugeordnet sind, können insbesondere jeweils verschiedene räumliche Positionen der anderen Verkehrsteilnehmer 310 beschreiben.

Die räumlichen Positionen der anderen Verkehrsteilnehmer 310 können dabei insbesondere dadurch ermittelt werden, dass mögliche, beobachtbare Bewegungen der anderen Verkehrsteilnehmer 310 angenommen werden. Wenn sich ein Verkehrsteilnehmer 310 beispielsweise in einem Kreisverkehr befindet, so sind mögliche, beobachtbare Bewegungen dieses Verkehrsteilnehmers 310 das Verlassen 144 des Kreisverkehrs an der nächsten Ausfahrt oder das Verbleiben 143 im Kreisverkehr. Von diesen beiden möglichen, beobachtbaren Bewegungen 143, 144 kann beispielsweise jeweils eine von einer möglichen zukünftigen Verkehrssituation 104, 105 umfasst sein.

In Schritt 225 wird die räumlichen Position des zumindest einen virtuellen Verkehrsteilnehmers 401 in jeder möglichen zukünftigen Verkehrssituation 101 - 105 derart bestimmt, dass sich der zumindest eine virtuelle Verkehrsteilnehmer 401 ausgehend von der räumlichen Position des zumindest einen virtuellen Verkehrsteilnehmers 401 in der tatsächlichen Verkehrssituation 100 bewegt.

Im darauffolgenden Schritt 230 werden Handlungsoptionen 132, 133 betreffend die Längsführung des eigenen Kraftfahrzeugs 300 für einen zweiten Zeitschritt herangezogen. Diese Handlungsoptionen 132, 133 basieren dabei beispielsweise auf einer möglichen zukünftigen Verkehrssituation 104 des ersten Zeitschritts.

Für jede dieser Handlungsoptionen 132, 133 werden in Schritt 240 analog zu Schritt 220 mögliche zukünftige Verkehrssituationen 106 - 109 auf Grundlage von möglichen, beobachtbaren Bewegungen 145 - 148 der anderen Verkehrsteilnehmer 310 bestimmt.

In Schritt 245 wird die räumliche Position des zumindest einen virtuellen Verkehrsteilnehmers 401 in jeder möglichen zukünftigen Verkehrssituation 108 - 109 für den zweiten Zeitschritt derart bestimmt, dass sich der zumindest eine virtuelle Verkehrsteilnehmer 401 ausgehend von der räumlichen Position des zumindest einen virtuellen Verkehrsteilnehmers 401 in der jeweiligen möglichen zukünftigen Verkehrssituation 101 - 105 für den ersten Zeitschritt bewegt.

In Schritt 250 werden alle möglichen zukünftigen Verkehrssituationen 101 - 109 bewertet, wobei hierbei sowohl die möglichen zukünftigen Verkehrssituationen 101 - 105 des ersten Zeitschritts, als auch die möglichen zukünftigen Verkehrssituationen 106 - 109 des zweiten Zeitschritts bewertet werden.

In diese Bewertung können insbesondere Eigenschaften der möglichen zukünftigen Verkehrssituationen 101 - 109 einfließen, wie beispielsweise der Abstand des eigenen Fahrzeugs 300 zu den anderen Verkehrsteilnehmern 310. Da ein großer Abstand des eigenen Fahrzeugs 300 zu den anderen Verkehrsteilnehmern 310 als sehr sicherer Zustand interpretiert werden kann, kann ein großer Abstand vergleichsweise positiv bewertet werden. Im Gegensatz dazu kann beispielsweise eine Kollision des eigenen Kraftfahrzeugs 300 mit einem Verkehrsteilnehmer 310 vergleichsweise negativ bewertet werden.

Wenn die Bewertung beispielsweise mittels einer Kostenfunktion erfolgt, so kann der Kostenwert beispielsweise gegenläufig zum Abstand des eigenen Kraftfahrzeugs 300 zu den anderen Verkehrsteilnehmern 310 sein. Ein großer Abstand führt somit zu einem geringen Kostenwert. Eine Kollision des eigenen Kraftfahrzeugs 300 mit einem Verkehrsteilnehmer 310 kann in diesem Fall beispielsweise zu einem sehr hohen Kostenwert führen.

Alternativ oder zusätzlich können in diese Bewertung auch die zu der jeweiligen zukünftigen Verkehrssituation 101 - 109 führenden Handlungsoptionen 130 - 133 eingehen. Insbesondere kann hierfür der Einfluss einer Handlungsoption 130 - 133 auf den Fahrkomfort des eigenen Kraftfahrzeugs 300 bestimmt werden. Beispielsweise ist eine betragsmäßig große Änderung der Geschwindigkeit des eigenen Kraftfahrzeugs 300 hinsichtlich des Fahrkomforts eher negativ zu bewerten. Beispielsweise kann in diesem Fall ein vergleichsweise hoher Kostenwert in die Bewertung der möglichen zukünftigen Verkehrssituation 101 - 109 einfließen. Alternativ dazu kann bei einer betragsmäßig kleinen Änderung der Geschwindigkeit des eigenen Kraftfahrzeugs 300 nur ein vergleichsweise geringer Kostenwert in die Bewertung der möglichen zukünftigen Verkehrssituation 101 - 109 einfließen.

Alternativ oder zusätzlich kann insbesondere auch die Eintrittswahrscheinlichkeit einer möglichen zukünftigen Verkehrssituation 101 - 109 in die Bewertung der möglichen zukünftigen Verkehrssituation 101 - 109 einfließen, beispielsweise in Form eines Gewichtungsfaktors. Dadurch kann dem Umstand Rechnung getragen werden, dass eine sehr wahrscheinliche mögliche zukünftige Verkehrssituation 101 - 109 einen größeren Einfluss auf die Auswahl einer Handlungsoption 130, 131 haben kann als eine eher unwahrscheinliche mögliche zukünftige Verkehrssituation 101 - 109.

In Schritt 260 wird in Abhängigkeit von Schritt 250 eine Handlungsoption 130, 131 für den ersten Zeitschritt ausgewählt. Hierfür können insbesondere für jede Handlungsoption 130, 131 die Bewertungen der auf die Handlungsoption 130, 131 zurückzuführenden möglichen zukünftigen Verkehrssituationen kombiniert werden. Beispielweise können für eine erste Handlungsoption 130 die Bewertungen der auf die erste Handlungsoption zurückführbaren möglichen zukünftigen Verkehrssituationen 101 - 103 aufsummiert werden. Für eine zweite Handlungsoption 131 können ebenfalls die Bewertungen der auf die zweiten Handlungsoption zurückführbaren möglichen zukünftigen Verkehrssituationen 104 -109 aufsummiert werden.

Wenn es sich bei den Bewertungen beispielsweise um Kostenwerte handelt, so kann für den ersten Zeitschritt diejenige Handlungsoption 130, 131 ausgewählt werden, die den geringsten aufsummierten Kostenwert aufweist.

Insbesondere wenn in einer ausgewählten möglichen zukünftigen Verkehrssituation 107 eine Kollision des eigenen Kraftfahrzeugs 300 mit dem weiteren Verkehrsteilnehmer 310 eintreten kann, kann dies einen großen Einfluss auf die Auswahl der Handlungsoption 130, 131 betreffend die Längsführung des eigenen Kraftfahrzeugs 300 haben. Wenn beispielsweise wegen der Kollision einer möglichen zukünftigen Verkehrssituation 107 ein sehr hoher Kostenwert zugeordnet ist, der um zumindest eine Größenordnung größer ist als die Kostenwerte aller anderen möglichen zukünftigen Verkehrssituationen 101 - 106, 108, 109, so wird dadurch die Auswahl der Handlungsoption 131, die zu der ausgewählten möglichen zukünftigen Verkehrssituation 107 führen kann, sehr unwahrscheinlich.

Insbesondere führt dies implizit dazu, dass das erfindungsgemäße Fahrsystem vergleichsweise vorsichtige und/oder die Geschwindigkeit des eigenen Kraftfahrzeugs 300 verringernde Handlungsoptionen 130, 131 auswählt, wenn sich in der Baumstruktur zumindest eine mögliche zukünftige Verkehrssituation 107 befindet, in der einen Kollision des eigenen Kraftfahrzeugs 300 mit einem weiteren Verkehrsteilnehmer 310 möglich ist.

Eine die Geschwindigkeit des eigenen Kraftfahrzeugs 300 verringernde Handlungsoption 130, 131 hat beispielsweise wiederum dem Effekt, dass sich die Zeitdauer bis zum möglichen, tatsächlichen Eintritt der Kollision verlängert, wodurch wiederum mehr Zeit für eine exaktere Bestimmung des tatsächlichen Verhaltens des weiteren Verkehrsteilnehmers 310 gewonnen wird.

In Schritt 270 wird die in Schritt 260 ausgewählte Handlungsoption 130, 131 für den ersten Zeitschritt ausgeführt. Dabei wird die Längsführung des eigenen Kraftfahrzeugs 300 derart beeinflusst, wie es die ausgewählte Handlungsoption 130, 131 vorgibt. Beispielsweise kann die Geschwindigkeit des eigenen Kraftfahrzeugs 300 erhöht 130 oder verringert 131 werden.

Sobald tatsächlich der zweite Zeitschritt eintritt, kann das erfindungsgemäße Fahrsystem insbesondere beginnend mit Schritt 200 erneut ausgeführt werden, wobei die tatsächliche Verkehrssituation 100 sich zwischenzeitlich offensichtlich verändert hat. Alternativ oder zusätzlich können aber zumindest auch Zwischenergebnisse einzelner Ablaufschritte für den ersten Zeitschritt in einem Speicherbaustein, den das Fahrsystem umfasst, gespeichert werden und bei der erneuten Ausführung des Fahrsystems im tatsächlichen, zweiten Zeitschritt wiederverwendet werden.

Fig. 3a zeigt eine beispielhafte Verkehrssituation zur Veranschaulichung des erfindungsgemäßen Fahrsystems.

Das eigene Kraftfahrzeug 300 befindet sich dabei vor einer Kreuzung, in die von links ein Fahrzeug 310 als weiterer Verkehrsteilnehmer einfährt.

Das eigene Kraftfahrzeug 300 plant beispielsweise, die Kreuzung auf der Bahn 301 zu durchqueren, wohingegen für das eigene Kraftfahrzeug 300 nicht eindeutig bestimmbar ist, ob der weitere Verkehrsteilnehmer 310 die Kreuzung auf der Bahn 311 durchqueren wird oder ob der weitere Verkehrsteilnehmer 310 auf der Bahn 312 rechts abbiegen wird.

Fig. 3b zeigt einen beispielhaften Zeitverlauf von durch das erfindungsgemäße Fahrsystem bewertbaren Wahrscheinlichkeiten. Die Kurve 321 gibt die zeitabhängige Wahrscheinlichkeit an, dass der weitere Verkehrsteilnehmer 310 die Kreuzung auf der Bahn 311 gerade überquert und die Kurve 322 gibt die zeitabhängige Wahrscheinlichkeit an, dass der weitere Verkehrsteilnehmer 310 auf der Bahn 312 rechts abbiegt. Im Laufe der auf der Abszisse aufgetragenen Zeit verändern sich die durch das Fahrsystem bewertbaren Wahrscheinlichkeiten derart, dass bis zu einem Zeitpunkt t = 9 s die beiden möglichen Bewegungspfade 311, 312 für den weiteren Verkehrsteilnehmer 310 im Wesentlichen als gleich wahrscheinlich erscheinen. Ab dem Zeitpunkt t = 9 s steigt die Wahrscheinlichkeit 321, dass der weitere Verkehrsteilnehmer 310 sich für den die Kreuzung überquerenden Pfad 311 entscheidet, rapide an.

Ein Grund dafür kann beispielsweise sein, dass der weitere Verkehrsteilnehmer 310 sich bereits sehr nahe an der Kreuzung befindet und immer noch keinen Fahrtrichtungsanzeiger aktiviert hat oder sein Verhalten erkennbar werden muss aufgrund dem Fortschreiten der Situation. Daraus kann geschlossen werden, dass der weitere Verkehrsteilnehmer 310 geradeaus fahren will.

Der Bewegungspfad 311 des Verkehrsteilnehmers 310, der die Kreuzung direkt überquert, kann zu einer möglichen zukünftigen Verkehrssituation 107 führen, in der eine Kollision des eigenen Kraftfahrzeugs 300 mit dem Verkehrsteilnehmer 310 droht.

Da diese mögliche zukünftige Verkehrssituation 107 beispielsweise einen sehr hohen Kostenwert aufweist, wird das erfindungsgemäße Fahrsystem mit hoher Wahrscheinlich bis zu dem Zeitpunkt t = 9 s tendenziell eine Handlungsoption 130, 131 auswählen 260, die nicht zu dieser möglichen zukünftigen Verkehrssituation 107 führen kann. Bei diesen Handlungsoptionen 130, 131 handelt es sich tendenziell um Handlungsoptionen 130, 131, die die Geschwindigkeit des Kraftfahrzeugs 300 zumindest nicht erhöhen. Insbesondere handelt es sich um Handlungsoptionen 130, 131, die die Geschwindigkeit des Kraftfahrzeugs 300 verringern, um ein abwartendes Verhalten zu erzeugen, bis weitere Handlungsoptionen offensichtlich werden.

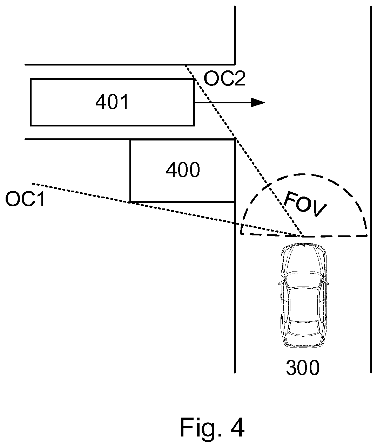

Fig. 4 zeigt eine beispielhafte Verkehrssituation mit einem virtuellen Verkehrsteilnehmer.

Das eigene Kraftfahrzeug 300 befindet sich dabei als tatsächliche Verkehrssituation (100) vor einer Einmündung, also dem Zusammentreffen einer Straße mit einer durchgehenden Straße ohne Fortsetzung über diese hinaus.

Das erfindungsgemäße Fahrsystem zum automatisierten Fahren des Kraftfahrzeugs 300 ist dabei eingerichtet, diese tatsächliche Verkehrssituation 100 im Umfeld des Kraftfahrzeugs 300 zu erfassen 200 und ein tatsächliches Sichtfeld FOV zumindest eines Sensors des Kraftfahrzeugs 300 in der tatsächlichen Verkehrssituation 100 zu bestimmen.

Ein Objekt 400 am Straßenrand schränkt dabei das Sichtfeld FOV des zumindest einen Sensors ein.

Das Fahrsystem ist deshalb eingerichtet, für zumindest einen Bereich OC1-OC2 im Umfeld des Kraftfahrzeugs 300, der nicht im tatsächlichen Sichtfeld FOV des zumindest einen Sensors liegt, einen virtuellen Verkehrsteilnehmer 401 in dem zumindest einen Bereich im Umfeld des Kraftfahrzeugs 300 in Abhängigkeit von einer Auftretenswahrscheinlichkeit für den virtuellen Verkehrsteilnehmer 401 zu simulieren.

Außerdem ist das Fahrsystem eingerichtet, zumindest zwei alternative Handlungsoptionen 130, 131 betreffend die Längs- und/oder Querführung des eigenen Kraftfahrzeugs 300 ausgehend von der tatsächlichen Verkehrssituation 100 für einen ersten Zeitschritt heranzuziehen 210, beispielsweise eine Beibehaltung der Geschwindigkeit oder eine Verringerung der Geschwindigkeit.

Für diese Handlungsoptionen 130, 131 bestimmt das Fahrsystem jeweils zumindest eine mögliche zukünftige Verkehrssituation 101 - 105 für den ersten Zeitschritt als Folge der jeweiligen Handlungsoption 130, 131.

Außerdem ist das Fahrsystem eingerichtet, die räumliche Position des zumindest einen virtuellen Verkehrsteilnehmers 401 in jeder möglichen zukünftigen Verkehrssituation 101 - 105 derart zu bestimmen, dass sich der zumindest eine virtuelle Verkehrsteilnehmer 401 ausgehend von der räumlichen Position des zumindest einen virtuellen Verkehrsteilnehmers 401 in der tatsächlichen Verkehrssituation 100 bewegt.

Beispielsweise kann sich der virtuelle Verkehrsteilnehmer mit konstanter Geschwindigkeit auf die Einmündung zubewegen.

Das Fahrsystem ist deshalb eingerichtet, für jeweils diese möglichen zukünftigen Verkehrssituationen 101 - 105 in Abhängigkeit von einer möglichen virtuellen Kollision des eigenen Kraftfahrzeugs 300 mit dem zumindest einen virtuellen Verkehrsteilnehmer 401 eine Bewertung vorzunehmen 250.

Beispielsweise kann dabei diejenige mögliche virtuelle Verkehrssituation, die sich aus einer Beibehaltung der Geschwindigkeit ergibt "schlechter" bewertet werden als diejenige mögliche virtuelle Verkehrssituation, die sich aus einer Verringerung der Geschwindigkeit ergibt, weil das Risiko einer Kollision des Kraftfahrzeugs 300 mit dem virtuellen Verkehrsteilnehmer 401 dabei höher ist.

Das Fahrsystem wählt eine dieser Handlungsoptionen 130, 131 in Abhängigkeit hiervon für den ersten Zeitschritt aus 260, und führt die ausgewählte Handlungsoption 130, 131 aus 270.

Beispielsweise wählt das Fahrsystem die diejenige Handlungsoption 130, 131 aus, die zu der "besser" bewerteten möglichen virtuellen Verkehrssituation führt.

Durch die kontinuierliche, zeitlich getaktete Wiederholung dieses Vorgehens wird beispielsweise die Geschwindigkeit des Kraftfahrzeugs 300 um das notwendige Maß verringert, um eine Kollision des Kraftfahrzeugs 300 mit einem tatsächlichen weiteren Verkehrsteilnehmer, der sich eventuell in dem zumindest einen Bereich OC1-OC2 im Umfeld des Kraftfahrzeugs 300, der nicht im tatsächlichen Sichtfeld FOV des zumindest einen Sensors liegt, zu verhindern.

Allerdings wird die Geschwindigkeit des Kraftfahrzeugs 300 nicht über das notwendige Maß hinaus verringert, da im Laufe durch die fortschreitende Bewegung des Kraftfahrzeugs 300 der Bereich OC1-OC2 verkleinert wird, wodurch das Kollisionsrisiko des Kraftfahrzeugs 300 mit dem virtuellen Verkehrsteilnehmer 401 sinkt, wodurch beispielsweise die Handlungsoption, die die Geschwindigkeit des Kraftfahrzeugs nicht verringert, "besser" bewertet wird. Dies kann sich insbesondere dadurch ergeben, dass bei der Bewertung weitere Kriterien berücksichtigt werden, insbesondere eine Abweichung der Geschwindigkeit des Kraftfahrzeugs 300 von einer Soll-Geschwindigkeit. Beispielsweise kann eine Abweichung der Geschwindigkeit des Kraftfahrzeugs 300 von einer Soll-Geschwindigkeit negativ in die Bewertung einfließen, was dazu führt, dass das Kraftfahrzeug 300, wenn kein oder nur ein geringes Risiko einer Kollision des Kraftfahrzeugs 300 mit dem virtuellen Verkehrsteilnehmer 401 besteht, versuchen wir, die Soll-Geschwindigkeit zu erreichen.

## Patentansprüche

1. Fahrsystem zum automatisierten Fahren für ein Kraftfahrzeug (300), wobei das Fahrsystem eingerichtet ist,
- eine tatsächliche Verkehrssituation (100) im Umfeld des Kraftfahrzeugs (300) zu erfassen (200),
- ein tatsächliches Sichtfeld (FOV) zumindest eines Sensors des Kraftfahrzeugs (300) in der tatsächlichen Verkehrssituation (100) zu bestimmen,
- für zumindest einen Bereich (OC1-OC2) im Umfeld des Kraftfahrzeugs (300), der nicht im tatsächlichen Sichtfeld (FOV) des zumindest einen Sensors liegt, einen virtuellen Verkehrsteilnehmer (401) in dem zumindest einen Bereich im Umfeld des Kraftfahrzeugs (300) in Abhängigkeit von einer Auftretenswahrscheinlichkeit für den virtuellen Verkehrsteilnehmer (401) zu simulieren,
**dadurch gekennzeichnet, dass**
- zumindest zwei alternative Handlungsoptionen (130, 131) betreffend die Längs- und/oder Querführung des eigenen Kraftfahrzeugs (300) ausgehend von der tatsächlichen Verkehrssituation (100) für einen ersten Zeitschritt heranzuziehen (210),
- für diese Handlungsoptionen (130, 131) jeweils zumindest eine mögliche zukünftige Verkehrssituation (101 - 105) für den ersten Zeitschritt als Folge der jeweiligen Handlungsoption (130, 131) zu bestimmen (220),
- die räumliche Position des zumindest einen virtuellen Verkehrsteilnehmers (401) in jeder möglichen zukünftigen Verkehrssituation (101 - 105) derart zu bestimmen, dass sich der zumindest eine virtuelle Verkehrsteilnehmer (401) ausgehend von der räumlichen Position des zumindest einen virtuellen Verkehrsteilnehmers (401) in der tatsächlichen Verkehrssituation (100) bewegt,
- für jeweils diese möglichen zukünftigen Verkehrssituationen (101 - 105) in Abhängigkeit von einer möglichen virtuellen Kollision des eigenen Kraftfahrzeugs (300) mit dem zumindest einen virtuellen Verkehrsteilnehmer (401) eine Bewertung vorzunehmen (250),
- eine dieser Handlungsoptionen (130, 131) in Abhängigkeit hiervon für den ersten Zeitschritt auszuwählen (260), und
- die ausgewählte Handlungsoption (130, 131) auszuführen (270).

2. Fahrsystem nach Anspruch 1, wobei die Auftretenswahrscheinlichkeit für den virtuellen Verkehrsteilnehmer (401) von der räumlichen Größe des Bereichs (OC1-OC2) im Umfeld des Kraftfahrzeugs (300), der nicht im tatsächlichen Sichtfeld (FOV) des zumindest einen Sensors liegt, abhängig ist.

3. Fahrsystem nach einem der vorherigen Ansprüche, wobei das Fahrsystem eingerichtet ist,
- für zumindest eine mögliche zukünftige Verkehrssituation (101 - 105) ein virtuelles Sichtfeld des zumindest einen Sensors des Kraftfahrzeugs (300) in der möglichen zukünftigen Verkehrssituation (101 - 105) zu bestimmen, und
- für zumindest einen Bereich im Umfeld des Kraftfahrzeugs (300), der nicht im virtuellen Sichtfeld des zumindest einen Sensors liegt, einen virtuellen Verkehrsteilnehmer (401) in dem zumindest einen Bereich im Umfeld des Kraftfahrzeugs (300) in Abhängigkeit von einer Auftretenswahrscheinlichkeit für den virtuellen Verkehrsteilnehmer (401) zu simulieren.

4. Fahrsystem nach einem der vorherigen Ansprüche, wobei das Fahrsystem eingerichtet ist, den virtuellen Verkehrsteilnehmer (401) derart zu simulieren, dass die Vorderkante des virtuellen Verkehrsteilnehmers (401) in Fahrtrichtung des virtuellen Verkehrsteilnehmers (401) direkt an einem Rand des Bereichs (OC1-OC2) im Umfeld des Kraftfahrzeugs (300) befindet, der nicht im tatsächlichen Sichtfeld (FOV) des zumindest einen Sensors liegt.

5. Fahrsystem nach einem der vorherigen Ansprüche, wobei das Fahrsystem eingerichtet ist, den virtuellen Verkehrsteilnehmer (401) derart zu simulieren, dass die Länge des virtuellen Verkehrsteilnehmers (401) entlang der Längsachse in Fahrtrichtung als unendlich angenommen wird.

6. Fahrsystem nach einem der vorherigen Ansprüche, wobei das Fahrsystem eingerichtet ist, die räumliche Position des zumindest einen virtuellen Verkehrsteilnehmers (401) in einer möglichen zukünftigen Verkehrssituation (101 - 105) in Abhängigkeit von einer konstanten Geschwindigkeit des virtuellen Verkehrsteilnehmers (401) zu bestimmen.

7. Fahrsystem nach Anspruch 6, wobei die konstante Geschwindigkeit des virtuellen Verkehrsteilnehmers (401) höher ist als die in der jeweiligen möglichen zukünftigen Verkehrssituation (101 - 105) tatsächlich erlaubte Höchstgeschwindigkeit.

8. Fahrsystem nach einem der vorherigen Ansprüche, wobei das Fahrsystem eingerichtet ist,
- für zumindest eine dieser möglichen zukünftigen Verkehrssituationen (101 - 105) für den ersten Zeitschritt eine oder mehrere Handlungsoptionen (132, 133) betreffend die Längs- und/oder Querführung des eigenen Kraftfahrzeugs (300) ausgehend von der jeweiligen möglichen zukünftigen Verkehrssituation (104) für zumindest einen zweiten Zeitschritt zu bestimmen (230),
- für jede dieser Handlungsoptionen (132, 133) für den zweiten Zeitschritt zumindest eine mögliche zukünftige Verkehrssituation (106 - 109) für den zweiten Zeitschritt als Folge der jeweiligen Handlungsoption (132, 133) für den zweiten Zeitschritt zu bestimmen (240),
- die räumliche Position des zumindest einen virtuellen Verkehrsteilnehmers (401) in jeder möglichen zukünftigen Verkehrssituation (101 - 105) für den zweiten Zeitschritt derart zu bestimmen (245), dass sich der zumindest eine virtuelle Verkehrsteilnehmer (401) ausgehend von der räumlichen Position des zumindest einen virtuellen Verkehrsteilnehmers (401) in jeweiligen möglichen zukünftigen Verkehrssituation (101 - 105) für den ersten Zeitschritt bewegt,
- für jede dieser möglichen zukünftigen Verkehrssituationen (106 - 109) für den zweiten Zeitschritt eine Bewertung in Abhängigkeit von einer möglichen virtuellen Kollision des eigenen Kraftfahrzeugs (300) mit dem zumindest einen virtuellen Verkehrsteilnehmer (401) vorzunehmen (250), und
- eine Handlungsoption (130, 131) für den ersten Zeitschritt in Abhängigkeit von den Bewertungen der möglichen zukünftigen Verkehrssituationen (101 - 105) für den ersten Zeitschritt und in Abhängigkeit von den Bewertungen der möglichen zukünftigen Verkehrssituationen (106 - 109) für den zumindest einen zweiten Zeitschritt auszuwählen (260).

9. Fahrsystem nach Anspruch 8, wobei das Fahrsystem eingerichtet ist,
- für zumindest eine mögliche zukünftige Verkehrssituation (106 - 109) für den zweiten Zeitschritt ein virtuelles Sichtfeld des zumindest einen Sensors des Kraftfahrzeugs (300) in der möglichen zukünftigen Verkehrssituation (106 - 109) zu bestimmen,
- für zumindest einen Bereich im Umfeld des Kraftfahrzeugs (300), der nicht im virtuellen Sichtfeld des zumindest einen Sensors liegt, einen virtuellen Verkehrsteilnehmer (401) in dem zumindest einen Bereich im Umfeld des Kraftfahrzeugs in Abhängigkeit von einer Auftretenswahrscheinlichkeit zu simulieren.

10. Fahrsystem nach einem der vorherigen Ansprüche, wobei
- eine Handlungsoption (130 - 133) betreffend die Längsführung des eigenen Kraftfahrzeugs (300) eine Verringerung der Geschwindigkeit des eigenen Kraftfahrzeugs (300) ist.

11. Verfahren zum automatisierten Fahren für ein Kraftfahrzeug, wobei das Verfahren die folgenden Schritte umfasst:
- Erfassen (200) einer tatsächlichen Verkehrssituation (100) im Umfeld des Kraftfahrzeugs (300),
- Bestimmen (203) eines tatsächlichen Sichtfelds (FOV) zumindest eines Sensors des Kraftfahrzeugs (300) in der tatsächlichen Verkehrssituation (100),
- Simulieren (207) eines virtuellen Verkehrsteilnehmers (401) in dem zumindest einen Bereich (OC1-OC2) im Umfeld des Kraftfahrzeugs (300) in Abhängigkeit von einer Auftretenswahrscheinlichkeit für den virtuellen Verkehrsteilnehmer (300), für zumindest einen Bereich (OC1-OC2) im Umfeld des Kraftfahrzeugs (300), der nicht im tatsächlichen Sichtfeld (FOV) des zumindest einen Sensors liegt,
**dadurch gekennzeichnet, dass**
- Heranziehen (210) von zumindest zwei alternative Handlungsoptionen (130, 131) betreffend die Längs- und/oder Querführung des eigenen Kraftfahrzeugs (300) ausgehend von der tatsächlichen Verkehrssituation (100) für einen ersten Zeitschritt,
- Bestimmen (220) von jeweils zumindest einer möglichen zukünftigen Verkehrssituation (101 - 105) für den ersten Zeitschritt als Folge der jeweiligen Handlungsoption (130, 131) für diese Handlungsoptionen (130, 131),
- Bestimmen (225) der räumlichen Position des zumindest einen virtuellen Verkehrsteilnehmers (401) in jeder möglichen zukünftigen Verkehrssituation (101 - 105) derart, dass sich der zumindest eine virtuelle Verkehrsteilnehmer (401) ausgehend von der räumlichen Position des zumindest einen virtuellen Verkehrsteilnehmers (401) in der tatsächlichen Verkehrssituation (100) bewegt,
- Vornehmen einer Bewertung (250) für jeweils diese möglichen zukünftigen Verkehrssituationen (101 - 105) in Abhängigkeit von einer möglichen virtuellen Kollision des eigenen Kraftfahrzeugs (300) mit dem zumindest einen virtuellen Verkehrsteilnehmer (401),
- Auswählen (260) von einer dieser Handlungsoptionen (130, 131) in Abhängigkeit hiervon für den ersten Zeitschritt, und
- Ausführen (270) der ausgewählten Handlungsoption (130, 131).

## Claims

1. Driving system for automated driving for a motor vehicle (300), wherein the driving system is configured
- to acquire (200) an actual traffic situation (100) in the surroundings of the motor vehicle (300),
- to determine an actual field of view (FOV) of at least one sensor of the motor vehicle (300) in the actual traffic situation (100),
- for at least one region (OC1-OC2) in the surroundings of the motor vehicle (300), which is not in the actual field of view (FOV) of the at least one sensor, to simulate a virtual road user (401) in the at least one region in the surroundings of the motor vehicle (300) as a function of a probability of appearance for the virtual road user (401),
**characterized in that**
- to use (210) at least two alternative action options (130, 131) relating to the longitudinal and/or lateral control of the ego motor vehicle (300) starting from the actual traffic situation (100) for a first time step,
- for each of these action options (130, 131), to determine (220) at least one possible future traffic situation (101-105) for the first time step as a consequence of the respective action option (130, 131),
- to determine the spatial position of the at least one virtual road user (401) in each possible future traffic situation (101-105) in such a way that the at least one virtual road user (401) moves starting from the spatial position of the at least one virtual road user (401) in the actual traffic situation (100),
- to perform (250) an assessment for each of these possible future traffic situations (101-105) as a function of a possible virtual collision of the ego motor vehicle (300) with the at least one virtual road user (401),
- to select (260) one of these action options (130, 131) as a function thereof for the first time step, and
- to execute (270) the selected action option (130, 131) .

2. Driving system according to Claim 1, wherein the probability of appearance for the virtual road user (401) is dependent on the spatial size of the region (OC1-OC2) in the surroundings of the motor vehicle (300), which is not in the actual field of view (FOV) of the at least one sensor.

3. Driving system according to either one of the preceding claims, wherein the driving system is configured
- for at least one possible future traffic situation (101-105), to determine a virtual field of view of the at least one sensor of the motor vehicle (300) in the possible future traffic situation (101-105), and
- for at least one region in the surroundings of the motor vehicle (300), which is not in the virtual field of view of the at least one sensor, to simulate a virtual road user (401) in the at least one region in the surroundings of the motor vehicle (300) as a function of a probability of appearance for the virtual road user (401).

4. Driving system according to any one of the preceding claims, wherein the driving system is configured to simulate the virtual road user (401) in such a way that the front edge of the virtual road user (401) in the travel direction of the virtual road user (401) is located directly at an edge of the region (OC1-OC2) in the surroundings of the motor vehicle (300), which is not in the actual field of view (FOV) of the at least one sensor.

5. Driving system according to any one of the preceding claims, wherein the driving system is configured to simulate the virtual road user (401) in such a way that the length of the virtual road user (401) along the longitudinal axis in the travel direction is assumed to be infinite.

6. Driving system according to any one of the preceding claims, wherein the driving system is configured to determine the spatial position of the at least one virtual road user (401) in a possible future traffic situation (101-105) as a function of a constant velocity of the virtual road user (401).

7. Driving system according to Claim 6, wherein the constant velocity of the virtual road user (401) is higher than the highest velocity actually permitted in the respective possible future traffic situation (101-105) .

8. Driving system according to any one of the preceding claims, wherein the driving system is configured
- for at least one of these possible future traffic situations (101-105), for the first time step, to determine (230) one or more action options (132, 133) relating to the longitudinal and/or lateral control of the ego motor vehicle (300) starting from the respective possible future traffic situation (104) for at least one second time step,
- for each of these action options (132, 133) for the second time step, to determine (240) at least one possible future traffic situation (106-109) for the second time step as a consequence of the respective action option (132, 133) for the second time step,
- to determine (245) the spatial position of the at least one virtual road user (401) in each possible future traffic situation (101-105) for the second time step in such a way that the at least one virtual road user (401) moves starting from the spatial position of the at least one virtual road user (401) in the respective possible future traffic situation (101-105) for the first time step,
- for each of these possible future traffic situations (106-109) for the second time step, to perform (250) an assessment as a function of a possible virtual collision of the ego motor vehicle (300) with the at least one virtual road user (401), and
- to select (260) an action option (130, 131) for the first time step as a function of the assessments of the possible future traffic situations (101-105) for the first time step and as a function of the assessments of the possible future traffic situations (106-109) for the at least one second time step.

9. Driving system according to Claim 8, wherein the driving system is configured
- for at least one possible future traffic situation (106-109) for the second time step, to determine a virtual field of view of the at least one sensor of the motor vehicle (300) in the possible future traffic situation (106-109),
- for at least one region in the surroundings of the motor vehicle (300), which is not in the virtual field of view of the at least one sensor, to simulate a virtual road user (401) in the at least one region in the surroundings of the motor vehicle as a function of a probability of appearance.

10. Driving system according to any one of the preceding claims, wherein
- an action option (130-133) relating to the longitudinal control of the ego motor vehicle (300) is a reduction of the velocity of the ego motor vehicle (300).

11. Method for automated driving for a motor vehicle, wherein the method comprises the following steps:
- acquiring (200) an actual traffic situation (100) in the surroundings of the motor vehicle (300),
- determining (203) an actual field of view (FOV) of at least one sensor of the motor vehicle (300) in the actual traffic situation (100),
- simulating (207) a virtual road user (401) in the at least one region (OC1-OC2) in the surroundings of the motor vehicle (300) as a function of a probability of appearance for the virtual road user (300), for at least one region (OC1-OC2) in the surroundings of the motor vehicle (300), which is not in the actual field of view (FOV) of the at least one sensor,
**characterized in that**
- using (210) at least two alternative action options (130, 131) relating to the longitudinal and/or lateral control of the ego motor vehicle (300) starting from the actual traffic situation (100) for a first time step,
- determining (220) at least one possible future traffic situation (101-105) in each case for the first time step as a consequence of the respective action option (130, 131) for these action options (130, 131),
- determining (225) the spatial position of the at least one virtual road user (401) in each possible future traffic situation (101-105) in such a way that the at least one virtual road user (401) moves starting from the spatial position of the at least one virtual road user (401) in the actual traffic situation (100),
- performing an assessment (250) for each of these possible future traffic situations (101-105) as a function of a possible virtual collision of the ego motor vehicle (300) with the at least one virtual road user (401),
- selecting (260) one of these action options (130, 131) as a function thereof for the first time step, and
- executing (270) the selected action option (130, 131) .

## Revendications

1. Système de conduite destiné à la conduite automatisée d'un véhicule automobile (300), le système de conduite étant conçu pour
- détecter (200) une situation de circulation réelle (100) dans la zone entourant le véhicule automobile (300),
- déterminer un champ de vision réel (FOV) d'au moins un capteur du véhicule automobile (300) dans la situation de circulation réelle (100),
- simuler pour au moins une région (OC1-OC2) de la zone entourant le véhicule automobile (300) qui n'est pas située dans le champ de vision réel (FOV) de l'au moins un capteur, un usager de la route virtuel (401) dans l'au au moins une région de la zone entourant le véhicule automobile (300) en fonction d'une probabilité d'occurrence de l'usager de la route virtuel (401), **caractérisé en ce que**
- utiliser (210) au moins deux options d'action alternatives (130, 131) relatives au guidage longitudinal et/ou latéral de son propre véhicule automobile (300) en fonction de la situation de circulation réelle (100) pour une première étape temporelle,
- déterminer (220), pour chacune de ces options d'action (130, 131), au moins une situation de circulation future possible (101-105) pour la première étape temporelle comme conséquence de l'option d'action respective (130, 131),
- déterminer la position spatiale de l'au moins un usager de la route virtuel (401) dans chaque situation de circulation future possible (101-105) de manière que l'au moins un usager de la route virtuel (401) se déplace dans la situation de circulation réelle (100) sur la base de la position spatiale de l'au moins un usager de la route virtuel (401),
- effectuer (250) une évaluation pour chacune de ces situations de circulation futures possibles (101-105) en fonction d'une éventuelle collision virtuelle de son propre véhicule automobile (300) avec l'au moins un usager de la route virtuel (401),
- sélectionner (260) une de ces options d'action (130, 131) en fonction de ladite évaluation pour la première étape temporelle, et
- exécuter (270) l'option d'action (130, 131) sélectionnée.

2. Système de conduite selon la revendication 1, la probabilité d'occurrence de l'usager de la route virtuel (401) dépendant de la dimension spatiale de la région (OC1-OC2) de la zone entourant le véhicule automobile (300) qui n'est pas située dans le champ de vision réel (FOV) de l'au moins un capteur.

3. Système de conduite selon l'une des revendications précédentes, le système de conduite étant conçu pour
- déterminer, pour au moins une situation de circulation future possible (101-105), un champ de vision virtuel de l'au moins un capteur du véhicule automobile (300) dans la situation de circulation future possible (101-105), et
- simuler (401), pour au moins une région de la zone entourant le véhicule automobile (300) qui n'est pas située dans le champ de vision virtuel de l'au moins un capteur, un usager de la route virtuel (401) dans l'au moins une région de la zone entourant le véhicule automobile (300) en fonction d'une probabilité d'occurrence de l'usager virtuel.

4. Système de conduite selon l'une des revendications précédentes, le système de conduite étant conçu pour simuler l'usager de la route virtuel (401) de manière que le bord avant de l'usager de la route virtuel (401) dans le sens de déplacement de l'usager de la route virtuel (401) est situé directement au niveau d'un bord de la région (OC1-OC2) de la zone entourant le véhicule automobile (300) qui n'est pas dans le champ de vision réel (FOV) de l'au moins un capteur.

5. Système de conduite selon l'une des revendications précédentes, le système de conduite étant conçu pour simuler l'usager de la route virtuel (401) de manière que la longueur de l'usager de la route virtuel (401) le long de l'axe longitudinal dans le sens de déplacement est supposée être infinie.

6. Système de conduite selon l'une des revendications précédentes, le système de conduite étant conçu pour déterminer la position spatiale de l'au moins un usager de la route virtuel (401) dans une situation de circulation future possible (101-105) en fonction d'une vitesse constante de l'usager de la route virtuel (401) .

7. Système de conduite selon la revendication 6, la vitesse constante de l'usager de la route virtuel (401) étant supérieure à la vitesse maximale effectivement autorisée dans la situation de circulation future possible respective (101-105).

8. Système de conduite selon l'une des revendications précédentes, le système de conduite étant conçu pour
- déterminer (230), pour au moins une de ces situations de circulation futures possibles (101-105) pour la première étape temporelle, une ou plusieurs options d'action (132, 133) relatives au guidage longitudinal et/ou latéral de son propre véhicule automobile (300) sur la base de la situation de circulation future possible respective (104) pour au moins une deuxième étape temporelle,
- déterminer (240), pour chacune de ces options d'action (132, 133) pour la deuxième étape temporelle, au moins une situation de circulation future possible (106-109) pour la deuxième étape temporelle comme conséquence de l'option d'action respective (132, 133) pour la deuxième étape temporelle,
- déterminer (245) la position spatiale de l'au moins un usager de la route virtuel (401) dans chaque situation de circulation future possible (101-105) pour la deuxième étape temporelle de manière que l'au moins un usager de la route virtuel (401) se déplace dans la situation de circulation future possible respective (101-105) pour la première étape temporelle sur la base de la position spatiale de l'au moins un usager de la route virtuel (401),
- effectuer (250), pour chacune de ces situations de circulation futures possibles (106-109) pour la deuxième étape temporelle, une évaluation en fonction d'une éventuelle collision virtuelle de son propre véhicule automobile (300) avec l'au moins un usager de la route virtuel (401), et
- sélectionner une option d'action (130, 131) pour la première étape temporelle en fonction des évaluations des situations de circulation futures possibles (101-105) pour la première étape temporelle et en fonction de l'évaluation des situations de circulation futures possibles (106-109) pour l'au moins une deuxième étape temporelle (260).

9. Système de conduite selon la revendication 8, le système de conduite étant conçu pour
- déterminer, pour au moins une situation de circulation future possible (106-109) pour la deuxième étape temporelle, un champ de vision virtuel de l'au moins un capteur du véhicule automobile (300) dans la situation de circulation future possible (106-109),
- simuler, pour au moins une région de la zone entourant le véhicule automobile (300) qui n'est pas située dans le champ de vision virtuel de l'au moins un capteur, un usager de la route virtuel (401) dans l'au moins une région de la zone entourant le véhicule automobile, en fonction d'une probabilité d'occurrence.

10. Système de conduite selon l'une des revendications précédentes,
- une option d'action (130-133) relative au guidage longitudinal de son propre véhicule automobile (300) étant une réduction de la vitesse de son propre véhicule automobile (300).

11. Procédé de conduite automatisée d'un véhicule automobile, le procédé comprenant les étapes suivantes :
- détecter (200) une situation de circulation réelle (100) dans la zone entourant le véhicule automobile (300) ,
- déterminer (203) un champ de vision réel (FOV) de l'au moins un capteur du véhicule automobile (300) dans la situation de circulation réelle (100),
- simuler (207) un usager de la route virtuel (401) dans l'au moins une région (OC1-OC2) de la zone entourant le véhicule automobile (300) en fonction d'une probabilité d'occurrence de l'usager de la route virtuel (300), pour au moins une région (OC1-OC2) de la zone entourant le véhicule automobile (300) qui n'est pas située dans le champ de vision réel (FOV) de l'au moins un capteur,
**caractérisé en ce que**
- utiliser (210) au moins deux options d'action alternatives (130, 131) relatives au guidage longitudinal et/ou latéral de son propre véhicule automobile (300) en fonction de la situation de circulation réelle (100) pour une première étape temporelle,
- déterminer (220) au moins une situation de circulation future possible (101-105) pour la première étape temporelle comme conséquence de l'option d'action respective (130, 131) pour ces options d'action (130, 131) ,
- déterminer (225) la position spatiale de l'au moins un usager de la route virtuel (401) dans chaque situation de circulation future possible (101-105) de manière que l'au moins un usager de la route virtuel (401) se déplace dans la situation de circulation réelle (100) sur la base de la position spatiale dudit au moins un usager de la route virtuel (401),
- effectuer une évaluation (250) pour chacune de ces situations de circulation futures possibles (101-105) en fonction d'une éventuelle collision virtuelle de son propre véhicule automobile (300) avec l'au moins un usager de la route virtuel (401),
- sélectionner (260) une de ces options d'action (130, 131) en fonction de ladite évaluation pour la première étape temporelle, et
- exécuter (270) l'option d'action (130, 131) sélectionnée.
